# EUROPEAN PATENT SPECIFICATION

(11) **EP 3 618 390 B1**
(45) Date of publication and mention of the grant of the patent: **02.08.2023**
(21) Application number: 18382632.0
(22) Date of filing: 29.08.2018
(51) Int. Cl.: H04L 65/1016, H04L 65/1046, H04L 65/1069, H04L 65/1073, H04L 65/1045, H04L 65/1104

(54) **SESSION MANAGEMENT SYSTEM AND METHOD**
SITZUNGSVERWALTUNGSSYSTEM UND-VERFAHREN
SYSTÈME ET PROCÉDÉ DE GESTION DE SESSION

(43) Date of publication of application: 04.03.2020
(73) Proprietor: Vodafone España, S.A.U., 28108 Alcobendas, Madrid (ES); Vodafone IP Licensing Limited, Newbury, Berkshire RG14 2FN (GB)
(72) Inventor: Martínez Perea, Rogelio, 28108 Madrid (ES); Dominguez, Rafael, 28108 Madrid (ES); Grace Ortuzar, Victor, 28108 Madrid (ES); López, Joaquin, 28108 Madrid (ES)
(74) Representative: Boult Wade Tennant LLP

(56) References cited:
- WO-A1-2011/071810
- GB-A- 2 539 843

## Description

### Field of invention

The present disclosure relates to managing session options in a session and is particularly, but not exclusively, applicable to the management of the preconditions that can be negotiated for establishing sessions. The disclosure relates to systems, methods and apparatus for managing session options.

### Background

When a user is trying to establish a Voice over LTE (VoLTE) call, defined procedures are provided for configuring the call according to a number of conditions or parameters. A preconditions (sometimes also referred to as "precondition") procedure is implemented for trying to ensure that the minimum network resources needed for the call to work are available. The preconditions negotiation is done by both parties of the call before going to ringing state, in order to avoid problems related to network resources.

More generally, when trying to set up a session, session parameters may be configured depending on one or more of: the radio access technology (e.g. 2G, 3G, etc.), the type of call (e.g. Circuit Switch "CS" or IP Multimedia Subsystem "IMS"), the user's subscription, network conditions, user terminal's capabilities, etc. User conditions can be assessed for one party or for each party to the call and network conditions can be assessed for one of the network or for the network for each call party.

However, while these call establishment procedures are generally well defined and operate well, in some cases they can lead to call failing, for example with the call dropping or having a poor quality. If the call parameters are not being suitably configured, calls can for example fail to establish or can be dropped quickly after setup while in other example calls can be established but with sub-optimal such that the user experience is low or even so low that it is below acceptable levels (e.g. the sound is hardly audible). For example, with the preconditions procedure, not all terminals support this procedure being implemented or not in the same way. For example, the behaviour of terminals varies between different terminals for handling cases where the preconditions procedure is activated and where it is not activated. This can lead to call failing and to poor user experience. It can therefore be desirable to provide an arrangement which helps with reducing the misconfiguration of sessions established between parties.

WO-2011/071810 describes look-ahead capability determination via device profiles.GB2539843 describes a network node that maintains a database of session description protocol (SDP) precondition preferences for downstream network elements.

### Summary

The invention is defined by the claims.

According to a first example there is provided a system for configuring a session option for a session of a user in a mobile telecommunications network. The system comprises a service module for providing at least the user with a session option configuration service for configuring the session option; and a terminal for the user. The mobile telecommunications network is configured to forward to the service module, when the user is registered for the session option configuration service, registration messages from the user and session setup messages for the user. The service module is configured to identify, upon receipt of a registration message from the user and sent via the terminal, terminal information for the terminal and to detect, upon receipt of a session setup message for setting up a session for the user, the current configuration for the session. The system is configured to, if it is determined that the current configuration of the session option is not the desired configuration and if, based on the identified terminal information for the terminal, it is determined that the terminal for the user is compatible with the desired configuration for the session option, modify the session setup message to configure the session option in the desired configuration.

In some examples, the session setup message is either addressed to at least the user or originating from the user.

The desired configuration may be one or more of: an activation of the session option, a deactivation of the session option and a configuration parameter of the session option.

The system may comprise a second terminal for the user. The service module can then be further configured to identify, upon receipt of a registration message from the user and sent via the second terminal, terminal information for the second terminal and to detect, upon receipt of a session setup message for setting up a session for the user, the current configuration for the session. The system can then be further configured to modify the session setup message to configure the session option in the desired configuration when it is determined that the current configuration of the session option is not the desired configuration and, based on the identified terminal information for the terminal and for the second terminal, that both the terminal and the second terminal are compatible with the desired configuration for the session option.

The mobile telecommunications network may comprise an IP Multimedia Subsystem "IMS" network. The system can then be configured to register the user for the option management service using a third party registration scheme of the IMS network.

The system may be configured to register the user to use the option management service by carrying out one or more of (i) configuring a user profile for the user to indicate that the user is registered to use the option management service; and (ii) setting a default configuration for users of the network so that the users are registered to the option management service. In some cases, the default configuration can be overruled such that that the users are registered to the option management service unless configured otherwise.

The service module may be an application server in an IP Multimedia Subsystem "IMS" network.

The terminal information may comprise one or more of all of or part of: a user agent identifier, a device identifier, an IMEI and an operating system identifier.

The session option may be associated with a preconditions exchange or with a preconditions SIP extension procedure. For example, the session option may be an option which, when activated, configures the user to negotiate session parameters in accordance with the preconditions procedure or with the preconditions SIP extension procedure, respectively.

The system being configured to modify the session setup message may comprise one or more of: (i) the service module being configured to modify the session setup message to configure the session option in the desired configuration in the session setup message; and (ii) the service module being configured to identify the session setup message for modification wherein the system comprises a further module configured to modify, upon detection of the session setup message being identified for modification, the session setup message to configure the session option in the desired configuration in the session setup message. In some examples, the further module may be a Session Border Controller "SBC".

The session setup message may be a SIP INVITE message and/or the registration message may be a SIP REGISTER message.

According to a second aspect of the present disclosure, there is provided a service module for configuring a session option for a session of a user in a mobile telecommunications network. The service module is configured to identify, upon receipt of a registration message from a user registered for the option management service and sent via a terminal for the user, terminal information for the terminal; detect, upon receipt of a session setup message for the user, the current configuration for the session option for the session; determine, based on the identified terminal information for the user, whether the terminal for the user is compatible with the desired configuration for the session option; and cause, if it is determined that the current configuration for the session option is not the desired configuration and that the terminal is compatible with the desired configuration for the session option, the session setup message to be modified to configure the session option to the desired configuration.

The mobile telecommunications network may for example be configured to forward, when the user is registered for an option management service, registration messages from the user and session setup messages for the user to the service module.

The service module may be an application server in an IMS network of the mobile telecommunications network.

The service module being configured to cause the session setup message to be modified may comprise the service module being configured to one or more of: modify the session setup message to configure the session option in the desired configuration in the session setup message; and identify the session setup message for modification to deactivate the option, to send the session setup message to a further module and to notify the further module that the session setup message has being identified for modification to configure the session option in the desired configuration in the session setup message.

According to another aspect of the present disclosure, there is provided a method of configuring a session option for a session of a user in a mobile telecommunications network using a service module for providing at least the user with a session option configuration service for configuring the session option, wherein the mobile telecommunications network is configured to forward to the service module, when the user is registered for the session option configuration service, registration messages from the user and session setup messages for the user. The method comprises identifying, upon receipt of a registration message from a user registered for the option management service and sent via a terminal for the user, terminal information for the terminal; detecting, upon receipt of a session setup message for setting up a session for the user, the current configuration for the session option is activated for the session; determining, based on the identified terminal information for the user, whether the terminal for the user is compatible with the desired configuration for the session option; and if it is determined that the current configuration for the session option is not the desired configuration and if, based on the identified terminal information for the terminal, it is determined that the terminal for the user is compatible with the desired configuration for the session option, modifying the session setup message to configure the session option in the desired configuration.

The method may further comprise one or both of: forwarding the modified session setup message to the user and forwarding the modified session setup message to the destination party, the destination party being different from the user.

The method may comprise registering the user for the option management service using a third party registration scheme in an IP Multimedia Subsystem "IMS" network.

The method may further comprise one or more of: configuring a user profile for the user to indicate that the user is registered to use the option management service; and setting a default configuration for users of the network so that the users are registered to the option management service unless configured otherwise.

The service module may be an application server in an IP Multimedia Subsystem "IMS" network.

The terminal information may comprise one or more of all of or part of: a user agent identifier, a device identifier, an IMEI and an operating system identifier.

The session option may be associated with a preconditions exchange or with a preconditions SIP extension procedure. For example, the session option may be an option which, when activated, configures the user to negotiate session parameters in accordance with the preconditions procedure or with the preconditions SIP extension procedure, respectively.

Modifying the session setup message may comprise one or more of: the service module modifying the session setup message to configure the session option in the desired configuration in the session setup message; and the service module identifying the session setup message for modification and a further module, upon detection of the session setup message being identified for modification, modifying the session setup message to configure the session option in the desired configuration in the session setup message. In some examples, the further module may be a Session Border Controller "SBC".

The session setup message may be a SIP INVITE message and/or wherein the registration message is a SIP REGISTER message.

The method steps for any of the methods in accordance with this other aspect may be carry out by the service module.

According to a further aspect of the present disclosure, there is provided a method of operating a service module for configuring a session option for a session of a user in a mobile telecommunications network. The method comprises the service module: identifying, upon receipt of a registration message from a user registered for an option management service and sent via a terminal for the user, terminal information for the terminal; detecting, upon receipt of a session setup message for the user, the current configuration for the session option for the session; determining, based on the identified terminal information for the user, whether the terminal for the user is compatible with the desired configuration for the session option; and causing, if it is determined that the current configuration for the session option is not the desired configuration and that the terminal is compatible with the desired configuration for the session option, the session setup message to be modified to configure the session option to the desired configuration.

According to yet another aspect of the present disclosure, there is provided a computer program comprising instructions which, when carried out, cause any of the methods discussed above to be implemented.

### Brief description of Figures

The present disclosure will now be described with reference to the drawings wherein:
Figure 1 illustrates a simplified call flow of a call establishment with IMS originating and terminating legs;
Figure 2 illustrates a simplified diagram of an IMS network;
Figure 3 illustrates an example simplified call flow in accordance with the present disclosure.
Figure 4 illustrates an example system in accordance with the present disclosure;
Figure 5 illustrates an example method in accordance with the present disclosure;
Figure 6 illustrates another example method in accordance with the present disclosure;
Figure 7 illustrate an example device for use in a mobile telecommunications network; and
Figure 8 illustrates example simplified call flows in accordance with the present disclosure.

### Description of Examples

While the present disclosure is generally presented in the context of Voice over LTE (VoLTE) and of the preconditions procedure, it will be understood that the teachings of the present invention apply equally to other examples. For example, the teachings can apply to any situation where two or more parties are attempting to setup a session and where a session option is available for configuring the call, for example using a call setup negotiation procedure or any other suitable session configuration option. For example, when a session is being established or setup, other resource negotiation procedures might be available to ensure that the session is established with parameters that are appropriate, for example parameters that are compatible with one or more of: the capabilities of the other terminal, type of network access or connection, network resource availability, etc. The teachings and techniques discussed herein can also be useful for options which do not relate to negotiation between parties and can be useful for any type of session option that can be configured using information on a session setup message (e.g. a SIP INVITE message).

Returning to an example use case of the invention and as mentioned above, when a user is trying to establish a VoLTE call, a preconditions procedure might be used. This procedure has been standardised and has a number of advantages such as minimising call setup problems (for example reducing ghost ringing) and improving call quality. On the other hand, this procedure also has a number of disadvantages:
(i) Increased call setup time: the additional message exchanges needed to complete the preconditions agreement can add a significant amount of time before the phone starts ringing. High call setup times are generally considered as undesirable
(ii) Added complexity: the call flow for setting up the call is considerably more complex when preconditions are used. This increase the likelihood of having an error in the call establishment and will generally result in more possible points of failure in complex networks.
(iii) Increased capacity utilisation: the IMS network nodes involved in the call flow will need to process more SIP messages (due to the increase of number of SIP messages required) which affects the total number of calls that can be delivered. As the number of messages to process increase, the call capacity of the network reduces.

Because of this drawbacks of the preconditions procedure, in more recent developments it has been decided to remove the preconditions where possible, effectively making this procedure optional. Accordingly, some terminals will support it and others will not support it. To handle these difference in terminal's behaviours and expectations, the behaviour of terminals has been defined such that they should be able to setup a VoLTE session seamlessly regardless of whether both terminals implement the procedure, whether neither terminal implements the procedure or whether one implements it and one does not. However different standards have provided different methods for handling the situation where the call is being setup without preconditions. In particular, the 3GPP standards and the IETF standards provide different guidance for handling such a situation. As a result, the terminals do not have a single standard behaviour and this can create problems when setting up calls.

The skilled person is for example directed to 3GPP TS24.229 Rel13 [1] for cases of VoLTE calls without the preconditions. More specifically, [1] mandates that a SIP 183 Session Progress Message with and Session Description Protocol (SDP) declaration is expected in response to a SIP INVITE without preconditions activated, before the terminal enters the ringing state. This enables the two parties to negotiate resources for the session or at least ensure that there are sufficient resources for a call to be established. However, some devices do not behave according to this standard and instead send a SIP 180 Ringing Message without an SDP declaration. This is more akin to the behaviour in 3GPP TR 29.962 V6.1.1 [2] than to the behaviour in [1] that is expected from these devices. This can cause significant problems because, if the SIP 180 message is sent before the resource negotiation that can be started with a SIP 183 Session Progress Message, the call might fail due to lack of resources. However, this would only do so after the caller picks up and the ringing would then also be classified as ghost ringing. Incidentally, this can also cause problems when attempting a handover according to Single Radio Voice Call Continuity (SRVCC or SR-VCC) in alerting mode. Accordingly, even though it can sometimes be desirable to deactivate the preconditions so as to avoid the complexities and drawbacks discussed above, deactivating the option is expected to lead to on one hand an improved user experience for some cases where terminals respond with a SIP 183 message and on the other hand on an increased number of dropped calls and ghost ringing. Accordingly, neither keeping nor the preconditions when activated in a network's sessions will be satisfactory and the call quality will suffer either way, albeit in a different manner.

In other words, a number of sessions can fail due to the preconditions option being deactivated and due to the terminating party not behaving in the expected manner when no preconditions are used such that the terminating party will respond in an unexpected way or at least in a way that leads to an increase call failure rate.

As the skilled person will understand, in the present disclosure the expressions call failure or session failure are intended to include both calls and sessions being set up in an unsatisfactory manner (e.g. with a call quality being under a threshold according to at least one quality metric) and calls or sessions failing to be established (e.g. with the call not being establishing at all and filing before the session setup procedure can be completed at all or with the call being established only for a short space of time before ending).

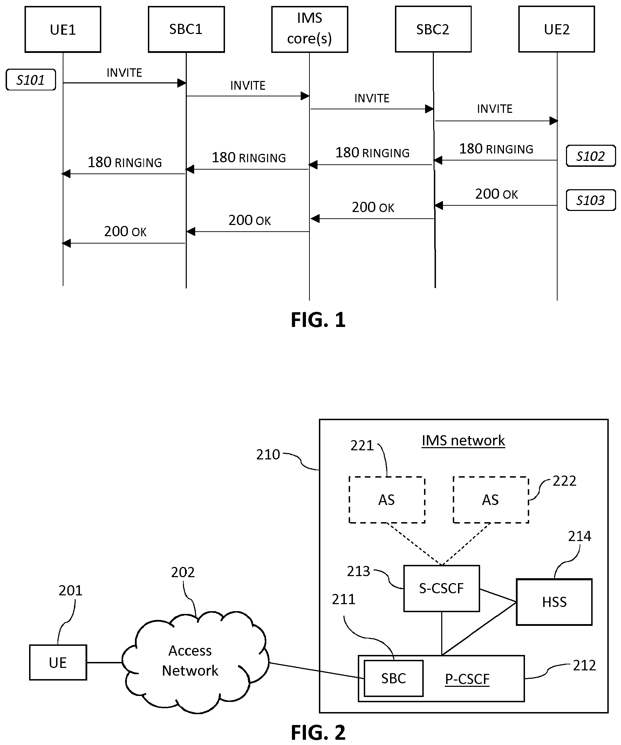

When facing such problems with the preconditions procedure, one option to address this problem is to deactivate or disable the preconditions in the network. If the preconditions procedure is disabled throughout the network, then the preconditions problems and limitations identified above can no longer occur such that this solution addresses the problem of handling different or deficient implementations of the preconditions procedure however this would introduce new problem, as also discussed above. Such a blanket option deactivation can for example be implemented using the Header Manipulation Rules (HMR) in the Session Border Controller (SBC). Figure 1 illustrates a simplified call flow of a call establishment with IMS originating and terminating legs. At a first stage, the originating UE (UE1) will send a call setup message (SIP INVITE) to the terminating UE (UE2). The message will go through the SBC (SBC1) for UE1, through the rest of the IMS network (or networks of UE1 and UE2 are associated with different IMs networks) and then through the SBC (SBC2) for UE2 before it will reach UE2. Likewise, the SIP 180 RINGING message sent at stage 2 will for through the same nodes in the other direction. It is noteworthy that, as the skilled person will know, in some cases the terminal may reply to a SIP INVITE with a SIP 183 Session Progress Message. As discussed above, when preconditions are deactivated, this SIP 183 response behaviour is the expected VoLTE behaviour which would help with resource reservation and with reducing call dropping and ghost ringing.

The 200 OK response sent at stage 3 (if UE2 answers the call) will also go through the same nodes, in the same direction as the SIP 180 RINGING messages, that is from UE2 to UE1. Accordingly, the SIP messages will go through the SBC for each IMS party and the SBC can apply header manipulation to modify the headers to remove the preconditions option so as to deactivate or disable the preconditions procedure for the call. For example, if UE1 is configured in the network not to use the preconditions, SBC1 can modify any message from UE1 (and/or any message for UE1) to remove the preconditions from the message. Likewise, SBC2 can modify any message for UE2 (and/or any message from UE2) to remove the preconditions. Accordingly, if one or both of UE1 and UE2 are marked as not supporting the preconditions, then the SIP INVITE can be modified so that, once it reaches UE2, the preconditions will not be enabled. Accordingly, the call should then proceed normally without preconditions. It is noteworthy that in other example an element other than the SBC may carry out the signalling to remove the preconditions but in this case, the same principles and teachings apply equally.

In other words, using this blanket deactivation option, the preconditions procedure can be disabled so as to avoid problems caused by the precondition procedure itself while the amount of the signalling modification needed to implement to solution remains low.

In accordance with the present disclosure there is provided a different approach for reducing the effect of the limitations of the preconditions implementations in terminals while handling the fact that different terminals will have different behaviours when preconditions are deactivated. It has been recognised that this solution based on a general deactivation of the preconditions for all users, while useful to a certain extent, has its own limitations regarding the quality of sessions being established and regarding the occurrence of ghost ringing for example. This approach is based on disabling of the option as an all-or-nothing choice which does not cater for this varying behaviour found in terminals.

Accordingly, the present disclosure provides an arrangement for handling (1) the implementation specific behaviour of the terminals and (2) the critical phase of establishing a session, such as a call, between terminals.

One difficulty when trying to avoid having a "blanket" deactivation of the preconditions option and when trying to have an arrangement where the option will be used by some terminals (e.g. with implementations that operate as expected) and deactivated for other terminals (e.g. with non-compliant implementations) instead, is to determine when to keep the option and when to disable it. In practice however, this will only be able to be determined once the terminating party (UE2) sends the first SIP 183 Session Progress Message at stage 2. Only then will the network be aware that the terminating party actually behaves as expected if the preconditions are deactivated (or does not behave as expected if it instead sends a SIP 180 response first). However, at this stage, it is already too late to correct the situation and the risk of call failure and of ghost ringing increases. In other words, an implementation that is provided on a per-call basis faces the problem of not being able to determine whether the terminating party supports the preconditions being deactivated until the call establishment is already too far ahead to configure the option. As a result, a number of network operators have not been able to deactivate this option although they sometimes desire to do so.

In one example, rather than using a blanket deactivation of the preconditions throughout the network, an internal database (e.g. a common user repository) is used. The databased can comprise information relating to a subscriber, such as one or more of a Mobile Station International Subscriber Directory Number (MSISDN), International Mobile Equipment Identity (IMEI) and services for the subscriber. For example, the first eight digits of the IMEI generally represent the terminal model such that part of the IMEI can be used to derive a terminal model for the terminal sending a message where the IMEI is included or derivable from the message. In this arrangement, the internal database can be used, for example by the SBC. The SBC can determine if the IMEI corresponds to a terminal that does not behave as expected when the preconditions are enabled and, if so, it can carry out header modification to disable the preconditions procedure, before the call setup message reaches the terminal. While this could alleviate some of the limitations of a blanket deactivation of the option, it also has some limitations. For example, the information may not be up-to-date and/or may not reflect which terminal a subscriber is currently using (e.g. amongst two or more terminal they might have).

Regarding how to determine whether to use the preconditions procedure in a way that is not expected to cause problems, different methods might be used. Such method can help build an understanding and/or database of how each terminal already analysed behaves depending on the configuration for the session option (e.g. preconditions). Different terminals will have different behaviour and, in order to determine whether a particular terminal is compatible with the expected behaviour when preconditions are activated or deactivated, different techniques might be used -individually or in combination. For example, document WO 2011/071810 entitled "Look-Ahead Capability Determination via Device Profiles" describes a database of codec compatibility information for devices can be built based on feedback from actual call failures and updated according to the problems experienced by the terminals. Using the techniques of this document, one could imagine an arrangement where, based on the terminal capabilities that have been observed in real-life, a database can be constructed which can indicate (for each terminal that has been used) whether the terminal has been able to use the preconditions procedure.

In other examples, the database is not built based on actual failed calls but based on device tests that can be performed offline for example. In this example, the devices can be tested and (i) devices that pass the test can be included in a whitelist for devices where the preconditions can be removed and/or (ii) devices that fail the test can be included in a blacklist for devices where the preconditions should not be deactivated (e.g. because they are expected to respond with a SIP 180 message rather than SIP 183 message).

Whichever criteria and methods are used to assess the devices, they can be whitelisted and/or blacklisted depending on their ability to handle the preconditions procedure. Then, based on one or more of a terminal being present or absent on a whitelist and a terminal being present or absent on a backlist, the preconditions procedure can be disabled or not for the terminal.

Regardless of the techniques used to build the information on the terminals' compatibility with the preconditions (or another session option), such a database can then for example be used in the method discussed above where the SBC consults the database to determine whether to keep or deactivate the option. However, this still does not address the problem of this example method of not always being able to predict the terminating terminal's behaviour in a reliable manner. If for example a user changes terminal, this information will not be updated in real time and that might result in call failure and in an unsatisfactory user experience.

In accordance with the present disclosure, there is provided an arrangement for making a decision on a per call basis and before it is too late using a service module (e.g. an Application Server "AS" in IMS) which is registered to receive at least some of the messages from a terminal. The service module is used in order to control the activation or deactivation of the option. For example, in an IMS network, the present disclosure can make use of the third party registration procedures so that the AS can be notified of when a terminal registered and when the terminal sends or receives a SIP INVITE.

To better understand how the techniques of the present disclosure can be applied in an IMS network, the basic architecture of an IMS network will be discussed first. Figure 2 illustrates a simplified diagram of an IMS network which will be used to illustrate how the invention can be implemented. In this simplified diagram, a terminal or UE 201 connects to an access network 202. This is generally expected to be a mobile telecommunications network (although it could be or include a different network) and can be managed by the same or a different operator than the operator managing the IMS network 210. The access network 202 is for giving the terminal access to a network through a core network, for example a mobile core network and/or IMS core network. The terminal may also have access to one or more public networks such as the Internet through the access network 202. In the case of a VoLTE or equivalent case, the access network is expected to include a mobile data network, such as an Evolved Packet Core as provided in LTE or NR networks or an equivalent data network, so that the terminal can set up a call over the data network provided by the mobile access network (as opposed to for example over a voice or Circuit Switch "CS" network).

The terminal 201 is connected through the IMS network 210 through the access network 202 and is first connected to a Proxy- Call Session Control Function "P-CSCF" 212. The P-CSCF 212 includes the functions of an SBC 211. It is noteworthy that the P-CSCF can sometimes be referred to as an "SBC" as the P-CSCF provides functions that are similar to that of an SBC. From one perspective, the P-CSCF 212 can be seen as an SBC 211 specialised IMS functionalities or, from a different perspective, it can be seen as P-CSCF 212 with SBC functionalities. As the skilled person will know, an SBC is an entity that carries out signalling control for Voice over IP (VoIP) signalling and helps secure and regulate the signalling that will enter the network, e.g. the IMS network in the example of Figure 2. These functions are part of the functions that are fulfilled by the P-CSCF. The P-CSCF 212 is effectively an SBC (that will therefore be the first point of entry into the IMS network) and that acts as a SIP proxy for the terminal and that will also provide encryption for the communications between the terminal and the IMS network. For example, in a roaming case the P-CSCF can be in the visited network.

As the skilled person will appreciate, when a reference is made to an SBC or to a P-CSCF in the VoLTE example, the same teachings apply equally to an SBC, to a P-CSCF and/or to any other node that fulfils the same functions of first point of entry for the session signalling. Also, the terms SBC and P-CSCF will be used interchangeably herein when used in the context of an IMS network.

The P-CSCF 212 is connected to an S-CSCF 213 which is the Serving-CSCF for the terminal. The S-CSCF acts as the signalling anchor in the IMS core network for the terminal and will therefore be found in the home network of the user. As a result, it is also the node that handles Applications Servers (AS) such as AS 221 and 222 in Figure 2. As the skilled person will appreciate, the teachings provided in respect of the S-CSCF in the VoLTE example can apply equally to any other signalling anchoring node in the home network of the user which manages signalling to application servers (or equivalent nodes). The IMS core network also include a Home Subscriber Server (HSS) 214 which is the user database for IMS users. The HSS 214 can be seen as the equivalent of the Home Location Register (HLR) in a mobile network. While the HSS 214 has been included in Figure 2, it is of limited relevant to the present disclosure such that it will not be discussed in greater detail. Likewise, the IMS core network can include additional elements, e.g. Interrogating-CSCF (I-CSCF) which are not illustrated in Figure 2. In general, these additional elements or any other element of limited relevance to the present disclosure will not be discussed herein in the interest of conciseness.

Although not part of the IMS core network, an IMS network can also include Application Servers for providing one or more services to the IMS subscribers. If an IMS subscriber (user) is registered for a service, the S-CSCF will send some of the signalling to the relevant application servers. In particular, the S-CSCF will send to the AS (providing the service for which the terminal is registered) the SIP REGISTER messages from the terminal for the user and the SIP INVITE messages that are being sent by the terminal or sent to the terminal. The AS will then process the messages as appropriate to provide the service and will forward the processed messages to the S-CSCF. If there are additional AS services that the user is registered to, the S-CSCF will forward the message to the relevant AS and once all have been covered, the S-CSCF can send the message towards the destination.

The present disclosure provides an arrangement with an entirely different approach compared to the previously discussed approaches. Rather than relying on past data or on a blanket deactivation of the session option, it is herein proposed to identify the terminating party in real-time but still before the session is even initiated and thus before the session or call reaches the terminating party -as will be clear from the discussion below.

More specifically, in the VoLTE example, an Application Server (for example Preconditions-AS "P-AS") is provided for handling the preconditions configuration for the calls. The P-AS can make use of the third party registration scheme in IMS (or an equivalent scheme) to receive signalling messages from and to the user. Once the user is subscribed to the service for managing the preconditions, the Preconditions AS (P-AS) can thus cause the INVITE message to be modified to remove the preconditions if appropriate.

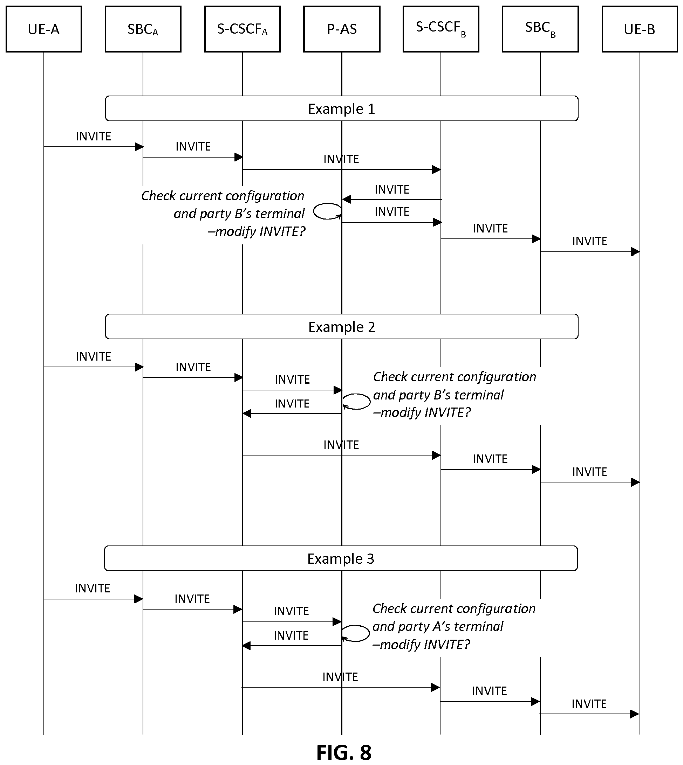

It is noteworthy that, while the third party registration scheme can be helpful for both obtaining terminal information and for identifying which messages to modify, other techniques may be instead or in addition to the third party registration scheme. For example, the S-CSCF for the originating party and/or terminating party may be configured to determined when to forward -and to forward- the call setup message to the module for processing. The reader is directed for example to the discussion of Figure 8 below.

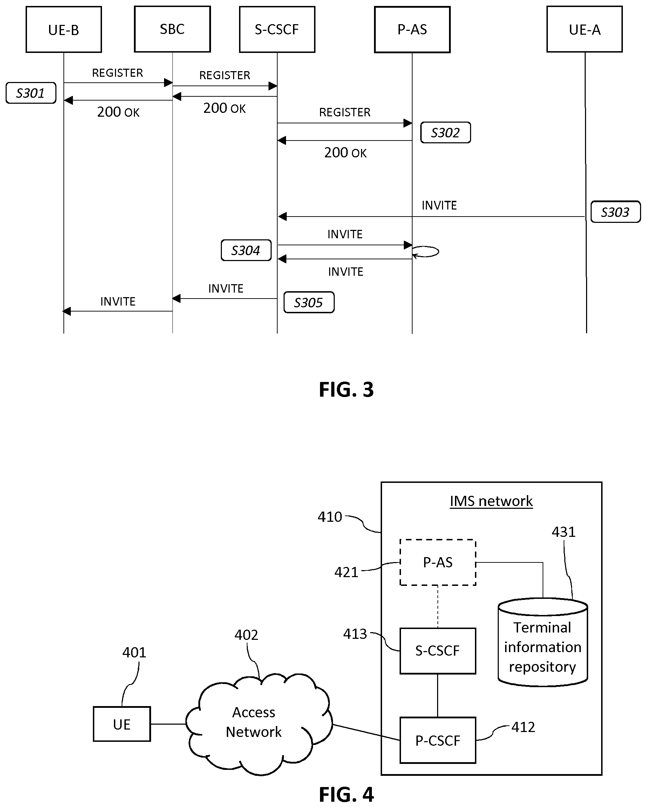

Figure 3 illustrates an example simplified call flow in accordance with the present disclosure. In this example, UE-B is an IMS subscriber and the SBC (P-CSCF), S-CSCF and P-AS are the respective node for this particular user. The originating UE "UE-A" can be from the same network or from a different network -the location or subscription for UE-A is not relevant to the remainder of the discussion of Figure 3. First, the UE-B will register with the IMS core network at stage S301. With IMS, the terminal UE-B will include a user agent for connecting to the IMS network, such as a SIP user agent that will sent a SIP REGISTER MESSAGE. The SIP REGISTER message will first reach the SBC (P-CSCF) before it can reach the S-CSCF. In this example, the user of UE-B has subscribed to the preconditions option management service wherein P-AS is associated with this service. Accordingly, the S-CSCF will forward the SIP REGISTER message to the P-AS. In this case, the S-CSCF will await completion of the registration procedure, i.e. until the stage where the SIP 200 OK response message can be sent, to start the second stage S302 of notifying the P-AS of the registration of the user.

It is noteworthy that in some case the stage 302 can be started before the SIP 200 OK message can be sent by the S-CSCF. In some examples, the S-CSCF may have determined that the registration is successful and thus initiated S302 before the SIP 200 OK message is actually sent. In other examples, the S-CSCF can sent the registration message to the P-AS before the registration procedure is completed. However, this second option can increase signalling as the REGISTER message would be sent to the P-AS regardless of the user completing the registration or not. Accordingly, if the user does not register, the REGISTER would have been sent to the P-AS even though the user will have to attempt registration again before it can initiate a call or be contacted for a call. Accordingly, while this second option remains a possible implementation, in most cases the first option (the S-CSCF sending the REGISTER message to P-AS once it is satisfied that the user can register) is likely to be preferred due to the reduced signalling.

Returning to the example of Figure 3, once the P-AS is notified of the registration and is notified of the registration of the user, it can use information in the SIP REGISTER message to detect terminal information the terminal that is currently used by the user of UE-B. For example, the SIP REGISTER message will generally indicate an identifier for the user agent that was used by UE-B to send the SIP REGISTER message. The user-agent information can later be used as terminal information so as to determine whether the terminal can use the preconditions procedure in the expected way.

Once the user is registered with the IMS network, if a user UE-A initiate a call to UE-B, it will send a SIP INVITE to UE-B at S303, wherein the SIP INVITE which will reach the S-CSCF for UE-B. because the user is registered for the preconditions management option, at the next stage S304 the S-CSCF will forward the SIP INVITE to the P-AS and expect the response from the P-AS. Once the P-AS receives the SIP INVITE, it can determine whether the preconditions configuration needs changing using one or more criteria. The P-AS can determine if the SIP INVITE has the preconditions procedure enabled or not. If it is not enabled, then the SIP INVITE will not require any modification and can thus be sent back to the S-CSCF without any changes. On the other hand, if the preconditions procedure is enabled for the call, the P-AS can determine whether the terminal for UE-B is compatible with the preconditions procedure being deactivated or not, before the call actually reaches UE-B. For example, if the identified terminal is one that does not behave in an expected way when the preconditions option is not activated, for example if the terminal sends a message other than a SIP 183 message with an SDP in response to the SIP INVITE message (e.g. a SIP 180 message), the preconditions option can be left activated. If on the other hand the terminal is expected to respond with a SIP 183 message with an SDP message, the option can be deactivated and this is not expected to cause any call failure or ghost ringing.

More specifically, the P-AS can retrieve the terminal information obtain from the earlier registration message, such as the user agent, to determine the current terminal's behaviour when the preconditions option is not activated. In some case, the P-AS may handle the database(s) of the current terminal information and/or of the relation between the terminal information and the compatibility with the call option while in other cases it can connect to an external database that manages this information. For example, at 5302 or after S302, the P-AS can update its own database or an external (relative to the P-AS) database with information regarding the current terminal information for the user. Then, at S304, the P-AS can consult this database to determine the current terminal information for the user. From this terminal information, information regarding the compatibility of the terminal with the preconditions option can be determined. In some case, this compatibility information can be determined directly from the terminal information (e.g. directly from the user agent) or indirectly from the terminal information. In the latter case, further terminal information (e.g. terminal brand and/or model) may be derived from the terminal information (e.g. user agent) and the terminal's suitability to use the preconditions options can be determined based on the further terminal information.

As mentioned above, different suitable methods may be used to determine whether a terminal can behave in an acceptable or desired way when the preconditions procedure is deactivated. In one example, it is determined whether the terminal and/or user agent has been whitelisted as compatible with this procedure being deactivated. If it is whitelisted, the option can be deactivated. On the other hand, if the has not been whitelisted and/or if it has been blacklisted, the terminal can be deemed non-compatible with the option being turned off and the P-AS can decide to leave the preconditions procedure activated with a view to avoiding possibly causing problems when the session is being established.

It is noteworthy that while references to one or more databases have been made, the skilled person will appreciate that the techniques of the present disclosure are equally applicable to other data structures that allow data to be associated with other data. For example, any other type of data structure (database, table or others) that can associate subscriber identity data with terminal information data, or terminal information data (that same as before or different) with option compatibility data would be suitable to use when trying to determine information for identifying the terminal and/or user agent or whether the terminal can use the preconditions procedure or lack thereof in an acceptable manner.

Returning to Figure 3, if the P-AS determines that the terminal for UE-B will behave as expected if the preconditions procedure is deactivated, the P-AS will cause the SIP INVITE message to be modified so as to disable the preconditions option to use the preconditions procedure. IF on the other hand the terminal would be expected to behave in a manner that could cause call setup problems, the option will remain activated. In other words, based on the identified terminal and on this terminal's behaviour when the option is activated and/or deactivate, the P-AS can decide whether to deactivate the option or not. It is noteworthy than in other case, the P-AS may wish to activate an option that was not previously activated, if appropriate, based on the identified terminal for the terminating party (and any other information, if appropriate). When disabling the preconditions before the SIP INVITE reaches UE-B and when UE-B is expected to handle a call without preconditions without creating issues, the likelihood of experiencing call failures because of the preconditions procedure can thereby be reduced. On the other hand, when leaving the preconditions activated when UE-B is not expected to handle a call without preconditions well, the risk of call failures and/or ghost ringing can be reduced.

Regarding how to cause the preconditions option to be disabled, different techniques may be used. In a first example technique, the P-AS can modify the SIP INVITE to disable the option before sending the (modified) SIP INVITE back to the S-CSCF, as part of the expected flow at stage S304. In another example, the P-AS may not modify the SIP INVITE directly to disable the option. For example, the P-AS might instead mark the SIP INVITE as to be modified for the option to be deactivated. Such a modification will not disable the option at this stage but can instead be used to inform another node that the option should be removed or disabled. For example, as the SBC is already entrusted with a number of header modification rules, the SBC can also be entrusted with the modification of the SIP INVITE to disable the preconditions. Letting the SBC carry out the actual disabling of the option can thus be more time and resource efficient than having an AS modify the session parameters at this stage. In this case, the SIP INVITE is modified by the P-AS only to mark it for preconditions deactivation and the marked SIP INVITE is sent back to the S-CSCF. The modification to deactivate the preconditions will be carried out by the SBC. Compared to the option of the P-AS disabling the option, using the SBC to carry out the modification enables the SBC to carry out any conflict resolution in case different AS want to carry out conflicting modifications on the SIP INVITE.

It is noteworthy that in the example of Figure 3, only one AS has been shown, namely the P-AS, but that other Application Servers might also be involved, if for example the terminal is registered for other services or if some services are provided to all users of the network. Accordingly, stages S302 and 5304 may be replicated as many times as necessary, in any relevant order. For example, as the skilled person will appreciate, they may be replicated before and/or after the corresponding stage for the P-AS.

While two example techniques for modifying the SIP INVITE have been provided, the skilled person will appreciate that the present disclosure is not limited to these two particular options and that any other suitable technique may be used. For example, the P-AS might communicate to the S-CSCF or the SBC in a different manner that the SIP INVITE message requires modification. In one alternative example, the P-AS might send a separate message or communication to the S-CSCF or SBC to inform them that the option should be disabled in the SIP INVITE.

Once the P-AS has processed the message at S304 and returned it to the S-CSCF, and once the S-CSCF has repeated stage S304 as many times as appropriate (depending on the number of AS / services being subscribed to), at stage S305 the SIP INVITE can be sent to the terminating UE UE-B via the SBC for UE-B.

In accordance with the present techniques, regardless of when and where the SIP INVITE can be modified to disable the preconditions procedure, when the terminal is deemed compatible with the preconditions procedure being deactivated and when the call had the preconditions option activated, the SIP INVITE message that is received by UE-B as the end of stage S305 is a modified SIP INVITE. That is, the SIP INVITE has been modified to disable the preconditions in the SIP INVITE if UE-B is deemed compatible with this configuration. This is being done because the P-AS has determined in real-time which terminal or user agent the terminating user is using (rather than relying on past terminal information) and can thus control the disabling of the preconditions accordingly, before the SIP INVITE even reaches the terminal UE-B.

As the skilled person will appreciate, in accordance with the present techniques, even if a subscriber changes terminal (e.g. buys a new device or switches between different devices for the same subscriber), the user will have to register again once it starts using the new terminal and accordingly the P-AS will be able to use information regarding the current terminal using terminal information derived from the latest registration message from the user. This is being done automatically through the S-CSCF automatically sending the registration and call setup messages to the S-CSCF. This enable the P-AS to use up-to-date real-time information for the user and terminal / user agent without having to rely on an external terminal database over which it has not control or view regarding the update frequency. Accordingly, the reliability of the terminal information and the accuracy of the call setup modification are both increased by having the same service module (e.g. P-AS) receiving registration messages and call setup messages for the combined purpose of updating the call setup message (if appropriate) based on the terminal information.

In other words, the preconditions procedure can be deactivated, when appropriate, based on the terminal that the user is currently using and before the SIP INVITE message reaches the terminating party UE-B (which would be too late to avoid the problems mentioned above if the preconditions are deactivated when UE-B does not behave in the expected manner). This in turns enables the preconditions procedure to be used when appropriate, thus deactivating this procedure when possible while leaving it activated when it is believed to be beneficial. As a result, the quality of the sessions can be improved when preconditions are used in the session setup and the likelihood of having call failures because of the differing terminal implementations can be reduced.

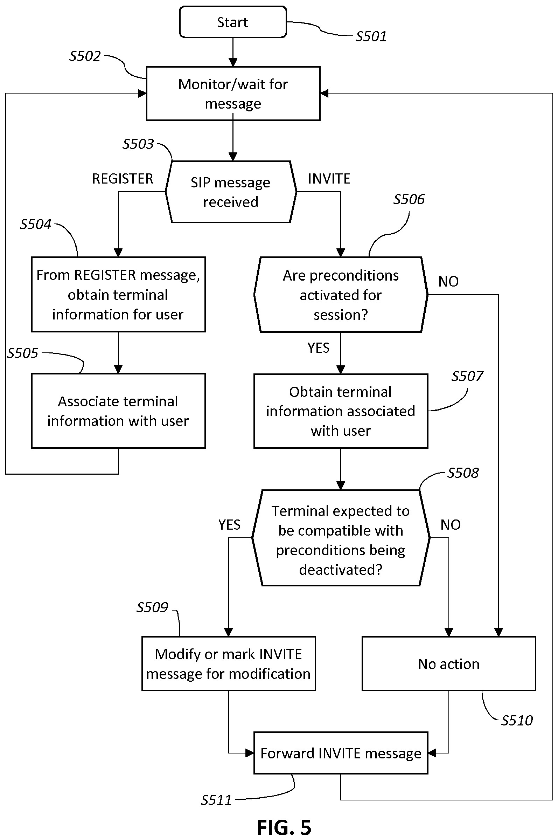

Figure 5 illustrates an example method in accordance with the present disclosure. In this example, the method is implemented by an application in an IMS network but the skilled person will appreciate that the same teachings and equivalent functions may be applied to and implemented in, respectively, other environments. The method starts at S501 and the AS can then receive SIP messages from nay user that is subscribed to the service the AS is providing, using the third party registration process. In IMS, the S-CSCF will sends the messages to the AS but it is conceivable that in other environments, the AS will received the messages differently e.g. the same network node may do the interception and message processing). Returning to the IMS example, the AS then awaits messages from its subscriber(s) at 5503.

Once a message is received, the AS will process SIP REGISTER and SIP INVITE messages differently and will therefore determine at S503 if the message is a REGISTER or INVITE message. It will be appreciated that, in the event that the AS can process other messages, it may also make a determination based on other message types. The discussion of Figure 5 focusses on the REGISTER and INVITE messages only such that other message types will not be expressly considered in this discussion.

If the message is a REGISTER message, the method moves to step S504 where terminal information is obtained for the user, based on the REGISTER message. Typically, the register message includes a user-agent identifier, wherein the user-agent is an element that is running on the user terminal. In other cases, different or additional information may be used as terminal information or to derive the terminal information from. If the user-agent is used, the actual terminal information may either be the user-agent (or any other type of first terminal information that is included in the registration message) or may be terminal information that is derived from the first terminal information. In one example, a user-agent identifier is extracted from the register message as first terminal information and, from the first terminal information, further terminal information is obtained. For example, a terminal brand and/or model may be derived from the first terminal information and/or information regarding the compatibility of the terminal or user-agent running on the terminal with the precondition can be obtained as at least part of the (further) terminal information. Regardless of whether the terminal information is information that was contained in the registration message (e.g. "first" terminal information above) or obtained indirectly from the registration message (e.g. "further" terminal information), the terminal information obtained at S504 is associated with the user at S505. If the terminal was previously associated with terminal information, the terminal information obtained at 5504 may replace or overwrite the previous terminal information and/or the previous terminal may be recorded as historical terminal information for the user. The AS can then return to monitoring of messages at S502, waiting for registration and session setup messages for its subscribers.

If the message is an INVITE message, the method moves to step S506 where it is determined whether the preconditions are activated in the session setup message for the user. If the preconditions are not used, then the preconditions are not expected to cause any problems when setting up the sessions and the AS does not need to take any action and it can move directly to step S510 (so that the INVITE can be sent returned unmodified at S511). It is however noteworthy that in other cases, for example with other options, it may desirable to consider whether to activate an option that was not activated in the session setup message. The skilled person will appreciate that the same teachings apply equally whether the system is considering whether to deactivate or activate an option that was activated and deactivated, respectively, in the call setup message. More generally, the same teachings apply when deciding how to configure an option, which can for example include configure a parameter or value for an option with changing the activation status of the option.

Returning to the discussion of figure 5, if however the preconditions are used by the originating party, the terminal information currently associated with the user can be retrieved at S507. As per the present disclosure, this information is expected to be the information from the last REGISTER message received from the user such that it is expected to be up-to-date terminal information for the user. Based on the terminal information associated with the user, it is determined if the terminal (or user-agent) is expected to be compatible with the preconditions being deactivated (S508). Said differently, it is determined if the terminal is expected to behaved in the desired way when responding to a session setup message with preconditions deactivated. If the terminal is not expected to behave appropriately, the AS does not take any action (S510) with respect to the INVITE and leaves the preconditions activated. On the other hand, if the preconditions are activated (S506-YES) and if the terminal is compatible with the preconditions being deactivated (S508), the method moves to step S509 where the AS can arrange for the INVITE to be modified to remove the preconditions. In one example, the AS can modify the INVITE and deactivate or disable the option. In another example, the AS might mark the INVITE as needing modification to remove the preconditions and let another element (e.g. the SBC/P-CSCF) make the modification. In one example, marking a session setup message can include adding a parameter to inform another node (for example the SBC) that the session option (for example preconditions) is to be disabled or removed from the session. In the case of a SIP session, this can for example be achieved using a reserved header field (for example "X-Remove-Preconditions" which can be set to "TRUE" when the preconditions are to be removed). In the IMS example, letting the SBC/P-CSCF modify the INVITE message makes the removal easier and less resource consuming. These and other examples have been discussed in greater detail above already.

Once the AS has processed the INVITE and arranged for it to be modified if appropriate, the AS can then forward the INVITE at S511. In an IMS network, the processed INVITE would be returned to the S-CSCF but in other cases the INVITE may for example be forwarded towards the terminating party to an element that had not received or processed this INVITE before. The skilled person will be able to determine how to route this message forward based on the architecture and call flows for the system at hand.

Figure 4 illustrates an example system in accordance with the present disclosure. The system of Figure 4 is similar to the example system of Figure 2 such that corresponding elements will have corresponding reference numerals. For the example the UE 401 of Figure 4 can correspond to the UE 201 of Figure 2 such that the description of most elements of Figure 4 will not be repeated herein. In the interest of conciseness and clarity, some elements have also been omitted from the illustration of Figure 4 but the skilled person will appreciate that Figure 4 is a simplified illustrated and that these elements (and potentially any other suitable element that is not represented in Figures 2 and 4) may nonetheless be included in the actual system. Returning to Figure 4, the system includes a Preconditions-AS "P-AS" 421 for managing the preconditions options in calls for the terminal 401. The P-AS 421 is connected to a terminal information repository or database 431. As the skilled person will appreciate, the illustration of Figure 4 can be seen from a logical perspective such that the repository 431 can be for example implemented as part of the P-AS 421 or as a separate element that the P-AS 421 will consult to determine additional information about the terminal. It is also noteworthy that two or more repositories may be provided. For example, a first one may provide information about the suspected terminal model based on the user-agent build in the registration message while the second one may provide information about the compliance of the terminal model with the preconditions. Again, in accordance with the present disclosure, neither of, one of or both of these may be implemented within the P-AS 421 if appropriate. They can also be implement in any appropriate data structure and/or data management system. For example, if the P-AS 421 has determined the user-agent used by UE 401, it can determine based on information in the repository 431 which terminal model is associated with the user agent and associate the terminal model with the user. Optionally, once the P-AS 421 later receives an INVITE for UE 401, it can retrieve the terminal model currently associated with the user and consult the repository 431 to determine if the terminal model has an acceptable behaviour when preconditions are being used. In another example, the P-AS 421 can associate the user-agent information with the user and, if the P-AS later receives an INVITE for the terminal, it can use information in the repository to determine whether the user-agent for the user is associated with an expected behaviour when preconditions are used.

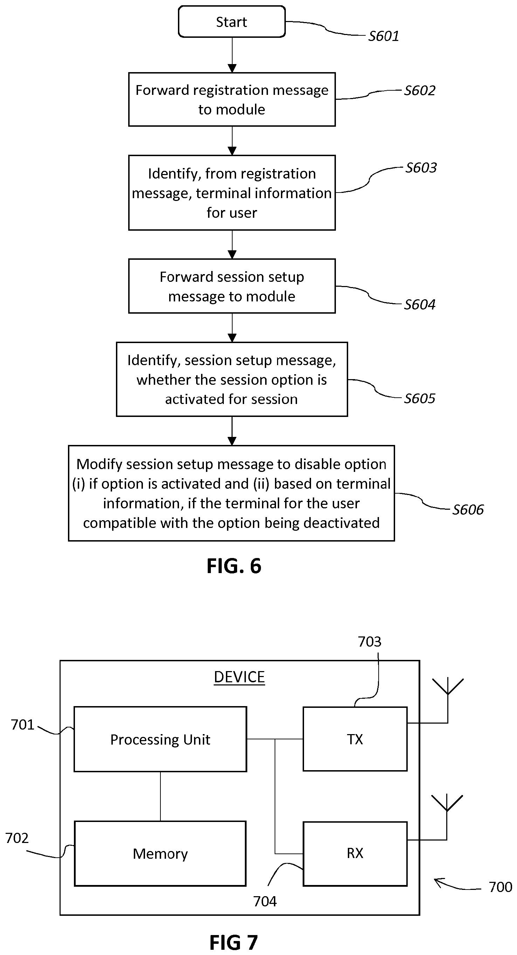

Figure 6 illustrates another example method in accordance with the present disclosure. In this example, the method is presented from the perspective of the system but many of the teachings and techniques in this example method correspond or are similar to those discussed in respect of Figure 5. The method starts at S601 and at S602 the system will forward a registration message from a service subscriber to the module for providing the service. In an IMS network the S-CSCF is expected to be the one carrying out step S602, for example based on a user profile for the user and on whether the user profile indicate that the user is a subscriber for this service for managing the call option (e.g. preconditions).

Then, at S603, the module can identify terminal information for the terminal the user is using to register, based on the register message received from the terminal. For example, the registration message may include information such as information regarding a client and/or user-agent running on the terminal, operating system information, brand and/or model information. If the registration message includes information such as a build of a user-agent or of an operating system, it may be possible to derive from this information further information regarding the terminal. For example, a model or brand may be detectable. In other cases, this information might be enough to determine the expected behaviour regarding the option. For example, it may be that the behaviour can be classified on a per user-agent or per user-agent build basis such that this information can be enough to make a determination on the expected behaviour.

At step S604, a session setup message for the user is forwarded to the module. While the method steps of the method of Figure 6 (or Figure 5) can be carried out in any appropriate order, it is generally expected that the user may only receive a session setup message when it is registered and active. Accordingly, the expected behaviour is that the terminal will send a registration message (which can be processed at 5602-5603) before it can receive (or send) a session setup message to establish a session. In this case, the module will have received a registration message and carried out steps S602-S603 before it receives a session setup message and can carry out 5604-5605. Once the module has been forwarded the session setup message it can identify whether the sessions option is activated for the session or not (S605).

Then at S606, if the option is activated based (on S605) and if it is determined that the terminal is compatible with the session option being deactivated (based on the terminal information from S603), the session setup message is modified to disable the session option. As mentioned above, this can sometimes be modified by the module or can be modified by another element (e.g. a P-CSCF/SBC in an IMS network).

Figure 7 illustrate an example device for use in a mobile telecommunications network. For example, the structure of Figure 7 may be applied to a base station and/or to a terminal of the present disclosure. More specifically the device 700 may include at least one processing unit 701, such as CPU, a GPU, etc.; a memory 702 which be any combination of a volatile and non-volatile/persistent memory. For example, the memory 702 may be used to store any data such as an operating system, software (which may for example be executed by the processing unit), configuration information for the device, session information, configuration information for any other node, etc. Such a terminal can be operable to run an operating system, a user agent, a SIP client, etc. At least the processing unit 701 is connected to a transmitter 703 and a receiver 704. While in the example of Figure 7 the transmitter 703 and receiver 704 have been represented as two separate elements, in other cases, they may be provided and/or represented as a single transceiver, and in other case more than one transmitter, receiver and/or transceiver may be provided. Also, the skilled person will appreciate that Figure 7 is a schematic representation of a device and that the actual implementation of a device may include more/fewer elements while the connections between the different elements may differ, e.g. depending on the implementation choices for the device. It may for example be decided that the processing unit 701 may be connected to the transmitter 703 and/or receiver 704 via a radio manager or any other suitable. For example, the radio manager may be configured to process data for transmission, received from higher layers (e.g. from an application, an IP layer, etc.), to generate messages that can be transmitted wirelessly in accordance with a mobile communications protocol. Likewise, it may be configured to process messages received over the air to pass information/data to higher layer as appropriate.

In accordance with the present disclosure, there is provided an arrangement for configuring an option for a session (e.g. a preconditions option) depending on whether the user is using a terminal that is believed to be compliant with the option being activated and/or deactivated, before the session setup message reaches the terminating party.

Accordingly, the teachings and techniques of the present disclosure can be applied on a per call basis, while providing a message processing technique for sessions setup messages that tries to limit the additional time and complexity that can be associated with message processing. For example, the use of external queries and complicated flows can be avoided or reduced, which reduces latency and complexity and also increases the accuracy of the assessment as the terminal information is expected to be more reliable and up-to-date when obtained from the registration messages rather than from a third party database.

It is noteworthy that, although the invention has been described from the perspective of checking information about the terminating party before deciding on whether to modify the session setup information to disable the option, in other cases the same techniques can be used for the originating party. In the example of IMS, this use case is less relevant as the user-agent or other terminal information for the originating party is often available in the session setup message (e.g. in a user-agent field in a SIP INVITE message). Accordingly, obtaining this information from the REGISTER message could then be redundant and thus not optimal. However, in other cases, there may be information that is not available in the session setup message and that is available in the registration message. Such information may be useful to determine whether to change the sessions parameters or options based on terminal information for the originating party.

Also, while the review and modification (if appropriate) of the session establishment/setup message based on the terminal information for the terminating party can be carried out on the terminating leg of the session (e.g. as you would expect when using a third party registration scheme), the present techniques can also be applied on the originating leg of the session. Figure 8 provides three illustrative examples of how the techniques discussed herein can be implemented. In the interest of conciseness and clarity, the registration call flow has not been represented but the skilled person will understand that for examples 1 and 2, at least party B would have had a registration procedure with the network (from which terminal information can be derived) and for example 3, at least party A would have had a registration procedure with the network (from which terminal information can also be derived). In Figure 8, both parties have been represented as IMS subscribers but, as will be clear from the discussion below, in some cases, one of the parties may not be an IMS subscriber and, even when they are, it will clear that in some cases they do not have to be subscribers of the same IMS network.
- *Example 1*: in this example the analysis and modification -if appropriate- of the call setup message occurs on the terminating leg of the call. Although not required, this is particularly well suited to the third party registration scenario discussed above. This example has already been discussed above such that this discussion will not repeated here. Although party A (originating party) has been illustrated as an IMS subscriber (of the same or different IMS network), this is not necessary and the call setup message may come from a conventional PLMN network instead.
- *Example 2*: in this example, the call setup message is also analysed and processed based on terminal information for party B (the terminating party) but this is carried out on the originating leg of the session. In some cases, it can be beneficial to re-configure (if appropriate) the session as early as possible and this would enable an earlier processing of the session setup message. For example, S-CSCF_{A} may be able to detect that UE-B (the terminal for party B) is registered with the IMS (or any corresponding communication) network. Accordingly, it can automatically send the call setup message to the module ("P-AS" in Figure 8) to see if it would be appropriate to re-configure the session setup message. While it would still be possible for the call setup message to be sent to the module on the terminating leg (as illustrated in example 1), as the message has already been processed in this respect, it would be less complex and time-consuming not to send this to the module again.
- *Example 3*: this case illustrates the processing of the call setup message based on terminal information for party A (the originating party) where this is carried out on the originating leg. As discussed above, with the current setup of IMS, the techniques discussed herein are not expected to be relied upon (as the terminal information can be obtained from the SIP INVITE) but in another context where terminal information is available in the registration message that is not available in the call establishment message, this could be a useful implementation. Again, there is no requirement for party B to be an IMS subscriber.

As the skilled person will appreciate, the wording used in the present disclosure is generally using the IMS terminology but the teachings of the present disclosure are not limited to IMS. Likewise, the skilled person will appreciate that the terms user and subscriber can be used interchangeably. In particular, the user will generally will be expected to be a subscriber to at least a service (e.g. the IMS, a mobile network, a more specific service or a set of two or more such services) and that the user -or terminal of the user- will send a registration message to register in accordance with this service subscription.

Also, while the method steps have generally been presented in a specific order, the present disclosure encompasses methods where any of the method steps are carried in a different order and/or in parallel to one or more other steps, so as long as it is technically feasible. For example, in Figure 5, steps S507 and S506 could be swapped. In such a case, the terminal information will be obtained for the user, before the preconditions are checked. In another example, steps S507 and S508 could be carried out first and if the outcome of S508 is YES, the method could then carry out step S506 and move on to S509 if preconditions are activated. In yet another example, steps S506 and S508 could be carried out in parallel or in conjunction and depending on the outcome of the two tests, the method would then proceed to S509 or 5510. These are non-exhaustive example variations on the methods discussed herein which are still in accordance with the teachings of the present disclosure, regardless of the order in which the steps are carried out. The same principles apply equally in respect of Figure 6. For example, steps S603 and 5604 may be carried out in parallel.

Additionally, in the interest of conciseness not all alternatives have been explicit discussed herein. As the skilled person will appreciate, in the present disclosure any aspect discussed from the perspective of an element being operable to do an action also discloses the same feature from the perspective of the method of doing the action. And likewise, any discussion presented from the perspective of a method step also discloses the same features from the perspective of any one or more suitable elements being operable to carry out some or all of the method step. It is also considered within the present disclosure that for any method step(s), there can be a computer program configured to carry out, when executed, the method step(s). Also, a device, such as a terminal or a network node, is generally considered from a logical perspective, as the element carrying out the appropriate function. Therefore, any such device may be implement using one or more physical elements as deemed appropriate. For example, it may be implemented in one (or more) of: a standalone physical device, in two or more separate physical devices, in a distributed system, in a virtual environment using any suitable hardware or hardware combination, etc. For example, when it is discussed that the module processes information from the registration message and information from the session setup message, it will be appreciated that two different elements may be implementing these respective functions. For example, a first module or node may be processing the registration message from the terminal (and for example update a database of the current terminals for subscribers) while a second module or node may be processing the call setup message from the terminal and may be consulting the database to review the information obtained by the first node or module. In the context of the present disclosure and from a logical perspective, such first and second node can be seen as a single (logical) call management module. As mentioned above, the first and second nodes can be seen as logical elements such that they may be implemented as a function of an existing node in the system and the call management module can be seen as a (logical) combination of these two functions.

Likewise, for any disclosure of a device configured or operable to carry out a function, it is also hereby considered as disclosed any circuitry (comprising for example a transmitter and/or received, as appropriate), which is configured to carry out, when in use, the same function. Furthermore, any device or functional element described herein may include, if appropriate, fewer or additional functions or elements. For example, and as mentioned above, terminals or base stations may generally have the structure illustrated in Figure 7 but in some cases it may also include additional element such as a scheduler, a radio manager (e.g. to manage different antennas and/or sectors), etc. as appropriate. In another example, a device having the structure generally represented in Figure 7 may also include any of: a SIM, a SIM manager, an operating system, etc. as appropriate.

In accordance with the present disclosure, there has therefore been provided a method of configuring a session, where the session can for example be a call (voice session) such as a Voice over LTE "VoLTE" call, a video call or any other session for at least two parties to establish a session. A session establishment or setup message may be any suitable setup message, such as a SIP INVITE in the case of a VoLTE call. Likewise, the registration message may be any suitable message for the subscriber to register to a service in accordance with its subscription, such as a SIP REGISTER message in the case of IMS and/or VoLTE. In some cases, the registration message can be for a network subscription (e.g. to inform the IMS network that the terminal is online) while in other cases, the registration message can be for registering for the session management service in accordance with the present disclosure for the subscriber to benefit from the session management techniques discussed herein. It will also be appreciated that in some cases the registration message can effectively serve as a combined registration message for both a network subscription and one or more service subscriptions for services provided by the network. Also, while the examples provided above generally cover a case of a party A calling a party B, the skilled person will appreciate that the session may involve more than two parties. For example, party A may call two or more parties B, C, etc. or one or more parties might be contacted by a service rather than party. For example, a conference service may contact one or more parties for establishing a conference call with two or more attendees. For one or more of the contacted parties, the teachings provided herein can be used to configure the session parameters.

Likewise, if the call setup message is for one party only but this party has two or more devices, the same principle applies. This will involve a call fork where the message will be sent to the two or more devices and the party can establish the session from any of them. In one example, each invite will be tailored to the device it is directed to. In a preconditions configuration example, one of the invites may have the preconditions activated and one might have the preconditions deactivated. Depending on where the call forking occurs and on where the session configuration techniques provided herein are applied, it may be difficult to have different call setup message for different devices. In this case, the same call setup message may be sent to all devices. In this case, the group of (registered) terminals for the user will be analysed as a whole. If one or more terminal of the group of terminals does not support the removal of the preconditions, then the module can decide not removed the preconditions (even if other terminals could support it). This would avoid causing problems if preconditions are removed and if the user establishes the call from a device that does not actually support its removal.

Also, the desired configuration may in some cases take into account the terminal information. With the preconditions procedure, it is expected that the desired configuration would be to deactivate the preconditions as long as the terminating terminal(s) can handle this appropriately. But in other cases, the configuration can depend on the terminal information. For example, an option may be associated with an option parameter and the desired configuration might be having to leave the option activated whenever possible and to have a value that is adapted to the class of device. For example, a terminal that does not behave in the expected manner when receiving the call setup message can have the option deactivated (with a view to reducing the number of messages received by this terminal with this option activated). But on the other hand, amongst terminals that behave as expected, the value at which this call option parameter is set can be modified, if appropriate, based on the terminal information. In other cases, the option shall always be activated or deactivated and the value parameter associated with it can be selected based on the terminal(s) for the terminating party. Accordingly, the call setup message can be configured based on the terminal(s) for the party before a response has even been received. This is particularly useful when waiting for the response from a terminal means an increased likelihood of having problems with the session.

While the present technique focusses on using terminal information for making a determination on how to configure a session option, it will be appreciated that additional information can be used where appropriate. In some examples, access network data can be derived from the registration message and this up-to-date and accurate information can be used if a session setup message is later received for the user. For example, the service module can be configured to also take access network information to determine if a terminal is compatible with the desired configuration. For example, a terminal that accesses the network through a Wi-Fi or equivalent type of access network can generally be expected to have more resources available and/or more reliability regarding resource availability. Accordingly, depending on the option and on the complexity of the implementation, this can be taken into account when determining whether the terminal is compatible with the desired configuration. Looking at the example of preconditions, a terminal that responds to a SIP INVITE without preconditions with a SIP 180 message (and not a 183 message with an SDP) could for example not be allowed to have the preconditions turned off if accessing the network through a mobile access network but could have the option deactivated when using a Wi-Fi or home network (even if the home network provide mobile connectivity to the terminal). In other cases, the technology of the access network can also be taken into account. For example, if a mobile technology is associated with higher reliability and/or higher data throughput and/or lower delays than others, this can affect the decision on how to configure the terminal (the desired configuration) and/or affect whether a terminal is deemed compatible with the desired configuration. Aside from access network information derived from the registration message, any other suitable type of information that can be derived from this message and/or any other suitable type of information obtained in a different way may be used to do either of or both of determining the desired configuration for the session setup message and whether one or more terminals are compatible with the desired configuration.

It is also noteworthy that "or" is used herein in the non-exclusive sense (meaning and/or) unless the "exclusive or" is the only logically or technically possible reading. Also, whenever elements are discussed as being connected, this encompasses these elements being directly or indirectly connected. For example, in Figure 3, any message from UE-B to the SBC would generally not be expected to go directly to the SBC but would first go through a base station and one or more equipment of the mobile or access network before it can reach the SBC. Likewise, the processing unit 701 of Figure 7 may not be directly connected to the other elements 702, 703 an d/or 704 of the device and the connection may include one or more further elements.

In accordance with the present disclosure, there has thus been provided a system for configuring a session option for a session of a user in a mobile telecommunications network. The system comprises a service module for providing at least the user with a session option configuration service for configuring the session option; and a terminal for the user. The mobile telecommunications network is configured to forward to the service module, when the user is registered for the session option configuration service, registration messages from the user and session setup messages for the user. The service module is configured to identify, upon receipt of a registration message from the user and sent via the terminal, terminal information for the terminal and to detect, upon receipt of a session setup message for setting up a session for the user, the current configuration for the session option for the session. The system is configured to, if it is determined that the current configuration for the session option is not the desired configuration and if, based on the identified terminal information for the terminal, it is determined that the terminal for the user is compatible with the desired configuration for the session option, modify the session setup message to configure the session option in the desired configuration. As discussed above, more than one elements of the system may be configured to implement this arrangement. For example, the service module may determine that the terminal for the user is compatible (or not) with the desired configuration for the session option and another element (e.g. SBC above) of the system may modify the session setup message to configure the session option to be in the desired configuration.

The session setup message may be either addressed to at least the user (terminating case) or originating from the user (originating case).

The desired configuration is one or more of: an activation of the session option, a deactivation of the session option and a configuration parameter of the session option. For example, with the preconditions option, a desired configuration may be to have the option deactivated. In other cases, it may be desired to have the option activated and/or to have the option configured in a specific manner (in cases where such a configuration is available). For example, if the session option can be configured with one or more parameters, these parameters can be configured in advance of the message being received by the terminating party.

The mobile telecommunications network may comprise an IP Multimedia Subsystem "IMS" network and the system may then be configured to register the user for the option management service using a third party registration scheme of the IMS network. According, the registration and session setup messages of the user will be sent to the service module based on the subscription to this option management service.

The system may be configured to register the user to use the option management service by configuring a user profile for the user to indicate that the user is registered to use the option management service (e.g. an IMS profile for the IMS subscriber, with this option being activated) and/or setting a default configuration for users of the network so that the users are registered to the option management service unless configured otherwise. For example, all users may automatically be enrolled for this service and the sessions option for terminating and/or originating sessions for all users may be configured in accordance with the teachings of the present disclosure. In such a case, all session establishment messages directed to one or more terminals that are registered with the network will be sent to an element or node to see if the configuration of the session option will be changed or not. In some cases, if appropriate, there could be an option to by-pass this default configuration and to opt out some of the users. This could for example to opt-out selected users (e.g. test users, users from one or more enterprise customers, etc.).

As the skilled person would have understood, the session option can sometimes be an option associated with a preconditions exchange or with a preconditions SIP extension procedure. For example, it can be an option to indicate whether a preconditions procedure should be used.

As discussed, the service module may be being configured to modify the session setup message to configure the session option in the desired configuration in the session setup message (e.g. to deactivate the option in the preconditions example discussed herein) or configured to identify the session setup message for modification. In the latter case, the system can comprise a further module (e.g. SBC / P-CSCF) configured to modify, upon detection of the session setup message being identified for modification, the session setup message to configure the session option in the desired configuration in the session setup message (e.g. deactivate the option for preconditions). The further module may make that detection based on the message itself (if for example it has been marked) or using any other suitable indication, for example a separate message from the service module identifying this message for modification.

As a reminder, the invention is only defined by the claims and is not limited by the example implementations provided disclosure.

### References

[1] 3GPP TS 24.229 V13.13.0 (2018-03-28) "IP multimedia call control protocol based on Session Initiation Protocol (SIP) and Session Description Protocol (SDP)*"*
[2] 3GPP TR 29.962 V6.1.1 (2005-10-20) "Signalling interworking between the 3GPP profile of the Session Initiation Protocol (SIP) and non-3GPP SIP usage*"*

## Claims

1. A system for configuring a session option for a session of a user in a mobile telecommunications network (210), wherein the system comprises:
a service module (221, 222) for providing at least the user with a session option configuration service for configuring the session option; and
a terminal (201) for the user,
wherein the mobile telecommunications network (210) is configured to forward to the service module (221, 222), when the user is registered for the session option configuration service, registration messages from the user and session setup messages for the user;
wherein the service module (221, 222) is configured to identify, upon receipt of a registration message from the user and sent via the terminal (201), terminal information for the terminal (201) and to detect, upon receipt of a session setup message for setting up a session for the user, the current configuration for the session;
wherein the system is configured to, when it is determined that the current configuration of the session option is not the desired configuration and when, based on the identified terminal information for the terminal (201), it is determined that the terminal (201) for the user is compatible with the desired configuration for the session option, modify the session setup message to configure the session option in the desired configuration, wherein the session option is associated with a preconditions exchange or with a preconditions SIP extension procedure and wherein the desired configuration is a deactivation of the session option.

2. The system of claim 1 wherein the session setup message is either addressed to at least the user or originating from the user.

3. The system of any of claims 1 to 2 further comprising a second terminal for the user and wherein:
the service module (221, 222) is further configured to identify, upon receipt of a registration message from the user and sent via the second terminal, terminal information for the second terminal and to detect, upon receipt of a session setup message for setting up a session for the user, the current configuration for the session;
wherein the system is further configured to modify the session setup message to configure the session option in the desired configuration when it is determined that the current configuration of the session option is not the desired configuration and, based on the identified terminal information for the terminal and for the second terminal, that both the terminal (201) and the second terminal are compatible with the desired configuration for the session option.

4. The system of any of claims 1 to 3 wherein the mobile telecommunications network (210) comprises an IP Multimedia Subsystem "IMS" network and wherein the system is configured to register the user for the option management service using a third party registration scheme of the IMS network.

5. The system of any of claims 1 to 4 wherein the system is configured to register the user to use the option management service by carrying out one or more of:
configuring a user profile for the user to indicate that the user is registered to use the option management service; and
setting a default configuration for users of the network so that the users are registered to the option management service unless configured otherwise such that, by default, all session setup messages for registered users will be processed by the service module (221, 222).

6. The system of any of claims 1 to 5 wherein the service module (221, 222) is an application server in an IP Multimedia Subsystem "IMS" network.

7. The system of any of claims 1 to 6 wherein the terminal information comprises one or more of all of or part of: a user agent identifier, a device identifier, an IMEI and an operating system identifier.

8. The system of any of claims 1 to 7 wherein the session option is an option which, when activated, configures the user to negotiate session parameters in accordance with the preconditions exchange or with the preconditions SIP extension procedure, respectively.

9. The system of any of claims 1 to 8 wherein the system being configured to modify the session setup message comprises one or more of:
the service module (221, 222) being configured to modify the session setup message to configure the session option in the desired configuration in the session setup message; and
the service module (221, 222) being configured to identify the session setup message for modification wherein the system comprises a further module configured to modify, upon detection of the session setup message being identified for modification, the session setup message to configure the session option in the desired configuration in the session setup message.

10. A service module (221, 222) for configuring a session option for a session of a user in a mobile telecommunications network (210), wherein the service module (221, 222) is configured to:
identify, upon receipt of a registration message from a user registered for an option management service and sent via a terminal (201) for the user, terminal information for the terminal (201);
detect, upon receipt of a session setup message for the user, the current configuration for the session option for the session;
determine, based on the identified terminal information for the user, whether the terminal (201) for the user is compatible with the desired configuration for the session option; and
cause, when it is determined that the current configuration for the session option is not the desired configuration and that the terminal (201) is compatible with the desired configuration for the session option, the session setup message to be modified to configure the session option to the desired configuration, wherein the session option is associated with a preconditions exchange or with a preconditions SIP extension procedure and wherein the desired configuration is a deactivation of the session option.

11. A method of configuring a session option for a session of a user in a mobile telecommunications network (210) using a service module (221, 222) for providing at least the user with a session option configuration service for configuring the session option, wherein the mobile telecommunications network (210) is configured to forward to the service module (221, 222), when the user is registered for the session option configuration service, registration messages from the user and session setup messages for the user, the method comprising:
identifying, upon receipt of a registration message from a user registered for the option management service and sent via a terminal (201) for the user, terminal information for the terminal (201);
detecting, upon receipt of a session setup message for setting up a session for the user, the current configuration for the session option is activated for the session;
determining, based on the identified terminal information for the user, whether the terminal (201) for the user is compatible with the desired configuration for the session option; and
when it is determined that the current configuration for the session option is not the desired configuration and when, based on the identified terminal information for the terminal (201), it is determined that the terminal (201) for the user is compatible with the desired configuration for the session option, modifying the session setup message to configure the session option in the desired configuration, wherein the session option is associated with a preconditions exchange or with a preconditions SIP extension procedure and wherein the desired configuration is a deactivation of the session option.

12. A method of operating a service module (221, 222) for configuring a session option for a session of a user in a mobile telecommunications network (210), the method comprising the service module (221, 222):
identifying, upon receipt of a registration message from a user registered for an option management service and sent via a terminal (201) for the user, terminal information for the terminal (201);
detecting, upon receipt of a session setup message for the user, the current configuration for the session option for the session;
determining, based on the identified terminal information for the user, whether the terminal (201) for the user is compatible with the desired configuration for the session option; and
causing, when it is determined that the current configuration for the session option is not the desired configuration and that the terminal (201) is compatible with the desired configuration for the session option, the session setup message to be modified to configure the session option to the desired configuration, wherein the session option is associated with a preconditions exchange or with a preconditions SIP extension procedure and wherein the desired configuration is a deactivation of the session option.

13. A computer program comprising instructions which, when carried out, cause the method of claim 11 or 12 to be implemented.

## Patentansprüche

1. System zum Konfigurieren einer Sitzungsoption für eine Sitzung eines Benutzers in einem mobilen Telekommunikationsnetz (210), wobei das System umfasst:
ein Dienstmodul (221, 222) zum Bereitstellen, zumindest für den Benutzer, eines Sitzungsoptionskonfigurationsdiensts zum Konfigureren der Sitzungsoption; und
ein Endgerät (201) für den Benutzer,
wobei das mobile Telekommunikationsnetz (210) so konfiguriert ist, dass dem Dienstmodul (221, 222), wenn der Benutzer für den Sitzungsoptionskonfigurationsdienst registriert ist, Registrierungsnachrichten von dem Benutzer und Sitzungseinrichtungsnachrichten für den Benutzer weitergeleitet werden;
wobei das Dienstmodul (221, 222) so konfiguriert ist, dass infolge des Empfangs einer über das Endgerät (201) gesendeten Registrierungsnachricht von dem Benutzer Endgerätinformationen für das Endgerät (201) identifiziert werden und infolge des Empfangs einer Sitzungseinrichtungsnachricht zum Einrichten einer Sitzung für den Benutzer die aktuelle Konfiguration für die Sitzung ermittelt wird;
wobei das System so konfiguriert ist, dass, wenn bestimmt wird, dass die aktuelle Konfiguration der Sitzungsoption nicht die gewünschte Konfiguration ist, und wenn basierend auf den identifizierten Endgerätinformationen für das Endgerät (201) bestimmt wird, dass das Endgerät (201) für den Benutzer mit der gewünschten Konfiguration für die Sitzungsoption kompatibel ist, die Sitzungseinrichtungsnachricht geändert wird, um die Sitzungsoption in der gewünschten Konfiguration zu konfigurieren, wobei die Sitzungsoption mit einem Voraussetzungsaustausch- oder mit einem Voraussetzungs-SIP-Erweiterungsverfahren verbunden ist und wobei die gewünschte Konfiguration eine Deaktivierung der Sitzungsoption ist.

2. System nach Anspruch 1, wobei die Sitzungseinrichtungsnachricht entweder zumindest an den Benutzer adressiert ist oder von dem Benutzer stammt.

3. System nach einem der Ansprüche 1 bis 2, weiter umfassend ein zweites Endgerät für den Benutzer und wobei:
das Dienstmodul (221, 222) ferner so konfiguriert ist, dass infolge des Empfangs einer über das zweite Endgerät gesendeten Registrierungsnachricht von dem Benutzer Endgerätinformationen für das zweite Endgerät identifiziert werden und infolge des Empfangs einer Sitzungseinrichtungsnachricht zum Einrichten einer Sitzung für den Benutzer die aktuelle Konfiguration für die Sitzung ermittelt wird;
wobei das System ferner so konfiguriert ist, dass die Sitzungseinrichtungsnachricht geändert wird, um die Sitzungsoption in der gewünschten Konfiguration zu konfigurieren, wenn bestimmt wird, dass die aktuelle Konfiguration der Sitzungsoption nicht die gewünschte Konfiguration ist und, basierend auf den identifizierten Endgerätinformationen für das Endgerät und für das zweite Endgerät, dass sowohl das Endgerät (201) als auch das zweite Endgerät mit der gewünschten Konfiguration für die Sitzungsoption kompatibel sind.

4. System nach einem der Ansprüche 1 bis 3, wobei das mobile Telekommunikationsnetz (210) ein IP-Multimedia-Subsystemnetz (IMS-Netz) umfasst und wobei das System so konfiguriert ist, dass der Benutzer mittels eines Drittanbieter-Registrierungsschemas des IMS-Netzes für den Optionsverwaltungsdienst registriert wird.

5. System nach einem der Ansprüche 1 bis 4, wobei das System so konfiguriert ist, dass der Benutzer für die Verwendung des Optionsverwaltungsdiensts registriert wird, durch Durchführen eines oder mehrerer von:
Konfigurieren eines Benutzerprofils für den Benutzer, um anzugeben, dass der Benutzer für die Verwendung des Optionsverwaltungsdiensts registriert ist; und
Einrichten einer Standardkonfiguration für Benutzer des Netzes, sodass die Benutzer bei dem Optionsverwaltungsdienst registriert sind, sofern keine anderweitige Konfiguration vorliegt, derart, dass standardmäßig alle Sitzungseinrichtungsnachrichten für registrierte Benutzer durch das Dienstmodul (221, 222) verarbeitet werden.

6. System nach einem der Ansprüche 1 bis 5, wobei es sich bei dem Dienstmodul (221, 222) um einen Anwendungsserver in einem IP-Multimedia-Subsystemnetz (IMS-Netz) handelt.

7. System nach einem der Ansprüche 1 bis 6, wobei die Endgerätinformationen eine oder mehrere aller oder Teile umfassen von: einer Benutzeragentenkennung, einer Gerätekennung, einer IMEI und einer Betriebssystemkennung.

8. System nach einem der Ansprüche 1 bis 7, wobei es sich bei der Sitzungsoption um eine Option handelt, die bei Aktivierung den Benutzer so konfiguriert, dass Sitzungsparameter jeweils entsprechend dem Voraussetzungsaustausch- oder dem Voraussetzungs-SIP-Erweiterungsverfahren verhandelt werden.

9. System nach einem der Ansprüche 1 bis 8, wobei das Konfigurieren des Systems zum Ändern der Sitzungseinrichtungsnachricht einen oder mehrere umfasst von:
Konfigurieren des Dienstmoduls (221, 222) zum Ändern der Sitzungseinrichtungsnachricht, um die Sitzungsoption in der gewünschten Konfiguration in der Sitzungseinrichtungsnachricht zu konfigurieren; und
Konfigurieren des Dienstmoduls (221, 222) zum Identifizieren der Sitzungseinrichtungsnachricht zur Änderung, wobei das System ein weiteres Modul umfasst, so konfiguriert, dass die Sitzungseinrichtungsnachricht infolge der Ermittlung der zur Änderung identifizierten Sitzungseinrichtungsnachricht geändert wird, um die Sitzungsoption in der gewünschten Konfiguration in der Sitzungseinrichtungsnachricht zu konfigurieren.

10. Dienstmodul (221, 222) zum Konfigurieren einer Sitzungsoption für eine Sitzung eines Benutzers in einem mobilen Telekommunikationsnetz (210), wobei das Dienstmodul (221, 222) konfiguriert ist zum:
Identifizieren, infolge des Empfangs einer über ein Endgerät (201) für den Benutzer gesendeten Registrierungsnachricht von einem Benutzer, der für einen Optionsverwaltungsdienst registriert ist, von Endgerätinformationen für das Endgerät (201);
Ermitteln, infolge des Empfangs einer Sitzungseinrichtungsnachricht für den Benutzer, der aktuellen Konfiguration für die Sitzungsoption der Sitzung;
Bestimmen, basierend auf den identifizierten Endgerätinformationen für den Benutzer, ob das Endgerät (201) für den Benutzer mit der gewünschten Konfiguration für die Sitzungsoption kompatibel ist; und
wenn bestimmt wird, dass die aktuelle Konfiguration für die Sitzungsoption nicht die gewünschte Konfiguration ist und dass das Endgerät (201) mit der gewünschten Konfiguration für die Sitzungsoption kompatibel ist, Veranlassen, dass die Sitzungseinrichtungsnachricht geändert wird, um die Sitzungsoption in der gewünschten Konfiguration zu konfigurieren, wobei die Sitzungsoption mit einem Voraussetzungsaustausch- oder mit einem Voraussetzungs-SIP-Erweiterungsverfahren verbunden ist und wobei die gewünschte Konfiguration eine Deaktivierung der Sitzungsoption ist.

11. Verfahren zum Konfigurieren einer Sitzungsoption für eine Sitzung eines Benutzers in einem mobilen Telekommunikationsnetz (210) mittels eines Dienstmoduls (221, 222) zum Bereitstellen, zumindest für den Benutzer, eines Sitzungsoptionskonfigurationsdiensts zum Konfigureren der Sitzungsoption, wobei das mobile Telekommunikationsnetz (210) so konfiguriert ist, dass dem Dienstmodul (221, 222), wenn der Benutzer für den Sitzungsoptionskonfigurationsdienst registriert ist, Registrierungsnachrichten von dem Benutzer und Sitzungseinrichtungsnachrichten für den Benutzer weitergeleitet werden, wobei das Verfahren umfasst:
Identifizieren, infolge des Empfangs einer über ein Endgerät (201) für den Benutzer gesendeten Registrierungsnachricht von einem Benutzer, der für den Optionsverwaltungsdienst registriert ist, von Endgerätinformationen für das Endgerät (201);
Ermitteln, infolge des Empfangs einer Sitzungseinrichtungsnachricht zum Einrichten einer Sitzung für den Benutzer, ob die aktuelle Konfiguration für die Sitzungsoption der Sitzung aktiviert ist;
Bestimmen, basierend auf den identifizierten Endgerätinformationen für den Benutzer, ob das Endgerät (201) für den Benutzer mit der gewünschten Konfiguration für die Sitzungsoption kompatibel ist; und
wenn bestimmt wird, dass die aktuelle Konfiguration für die Sitzungsoption nicht die gewünschte Konfiguration ist, und wenn basierend auf den identifizierten Endgerätinformationen für das Endgerät (201) bestimmt wird, dass das Endgerät (201) für den Benutzer mit der gewünschten Konfiguration für die Sitzungsoption kompatibel ist, Ändern der Sitzungseinrichtungsnachricht, um die Sitzungsoption in der gewünschten Konfiguration zu konfigurieren, wobei die Sitzungsoption mit einem Voraussetzungsaustausch- oder mit einem Voraussetzungs-SIP-Erweiterungsverfahren verbunden ist und wobei die gewünschte Konfiguration eine Deaktivierung der Sitzungsoption ist.

12. Verfahren für den Betrieb eines Dienstmoduls (221, 222) zum Konfigurieren einer Sitzungsoption für eine Sitzung eines Benutzers in einem mobilen Telekommunikationsnetz (210), wobei das Verfahren umfasst, dass das Dienstmodul (221, 222):
infolge des Empfangs einer über ein Endgerät (201) für den Benutzer gesendeten Registrierungsnachricht von einem Benutzer, der für einen Optionsverwaltungsdienst registriert ist, Endgerätinformationen für das Endgerät (201) identifiziert;
infolge des Empfangs einer Sitzungseinrichtungsnachricht für den Benutzer die aktuelle Konfiguration für die Sitzungsoption für die Sitzung ermittelt;
basierend auf den identifizierten Endgerätinformationen für den Benutzer bestimmt, ob das Endgerät (201) für den Benutzer mit der gewünschten Konfiguration für die Sitzungsoption kompatibel ist; und
wenn bestimmt wird, dass die aktuelle Konfiguration für die Sitzungsoption nicht die gewünschte Konfiguration ist und dass das Endgerät (201) mit der gewünschten Konfiguration für die Sitzungsoption kompatibel ist, veranlasst, dass die Sitzungseinrichtungsnachricht geändert wird, um die Sitzungsoption in der gewünschten Konfiguration zu konfigurieren, wobei die Sitzungsoption mit einem Voraussetzungsaustausch- oder mit einem Voraussetzungs-SIP-Erweiterungsverfahren verbunden ist und wobei die gewünschte Konfiguration eine Deaktivierung der Sitzungsoption ist.

13. Computerprogramm, das Anweisungen umfasst, die bei Ausführung veranlassen, dass das Verfahren nach Anspruch 11 oder 12 implementiert wird.

## Revendications

1. Un système de configuration d'une option de session pour une session d'un utilisateur dans un réseau de télécommunications mobile (210), où le système comprend :
un module de service (221, 222) destiné à la fourniture à au moins l'utilisateur d'un service de configuration d'option de session pour la configuration de l'option de session, et
un terminal (201) pour l'utilisateur,
où le réseau de télécommunications mobile (210) est configuré de façon à transférer au module de service (221, 222), lorsque l'utilisateur est inscrit auprès du service de configuration d'option de session, des messages d'inscription provenant de l'utilisateur et des messages d'établissement de session pour l'utilisateur,
où le module de service (221, 222) est configuré de façon à identifier, après la réception d'un message d'inscription à partir de l'utilisateur et envoyé par l'intermédiaire du terminal (201), des informations de terminal pour le terminal (201) et à détecter, après la réception d'un message d'établissement de session destiné à l'établissement d'une session pour l'utilisateur, la configuration actuelle pour la session,
où le système est configuré de façon à, lorsqu'il est déterminé que la configuration actuelle de l'option de session n'est pas la configuration souhaitée et lorsque, en fonction des informations de terminal identifiées pour le terminal (201), il est déterminé que le terminal (201) pour l'utilisateur est compatible avec la configuration souhaitée pour l'option de session, modifier le message d'établissement de session de façon à configurer l'option de session dans la configuration souhaitée, où l'option de session est associée à un échange de préconditions ou à une procédure d'extension SIP de préconditions et où la configuration souhaitée est une désactivation de l'option de session.

2. Le système selon la Revendication 1 où le message d'établissement de session est soit adressé à au moins l'utilisateur ou en provenance de l'utilisateur.

3. Le système selon l'une quelconque des Revendications 1 à 2 comprenant en outre un deuxième terminal pour l'utilisateur et où :
le module de service (221, 222) est configuré en outre de façon à identifier, après la réception d'un message d'inscription à partir de l'utilisateur et envoyé par l'intermédiaire du deuxième terminal, des informations de terminal pour le deuxième terminal et à détecter, après la réception d'un message d'établissement de session pour l'établissement d'une session pour l'utilisateur, la configuration actuelle pour la session,
où le système est configuré en outre de façon à modifier le message d'établissement de session de façon à configurer l'option de session dans la configuration souhaitée lorsqu'il est déterminé que la configuration actuelle de l'option de session n'est pas la configuration souhaitée et, en fonction des informations de terminal identifiées pour le terminal et pour le deuxième terminal, qu'à la fois le terminal (201) et le deuxième terminal sont compatibles avec la configuration souhaitée pour l'option de session.

4. Le système selon l'une quelconque des Revendications 1 à 3 où le réseau de télécommunications mobile (210) comprend un réseau de sous-système multimédia IP "IMS" et où le système est configuré de façon à inscrire l'utilisateur auprès du service de gestion d'options au moyen d'un mécanisme d'inscription de partie tierce du réseau IMS.

5. Le système selon l'une quelconque des Revendications 1 à 4 où le système est configuré de façon à inscrire l'utilisateur pour l'utilisation du service de gestion d'options par l'exécution d'une ou de plusieurs des opérations suivantes :
la configuration d'un profil d'utilisateur pour l'utilisateur destiné à indiquer que l'utilisateur est inscrit pour l'utilisation du service de gestion d'options, et
le réglage d'une configuration par défaut pour des utilisateurs du réseau de sorte que les utilisateurs soient inscrits au service de gestion d'options sauf si autre configuration de sorte que, par défaut, la totalité des messages d'établissement de session pour des utilisateurs inscrits seront traités par le module de service (221, 222).

6. Le système selon l'une quelconque des Revendications 1 à 5 où le module de service (221, 222) est un serveur d'applications dans un réseau de sous-système multimédia IP, "IMS".

7. Le système selon l'une quelconque des Revendications 1 à 6 où les informations de terminal comprennent un ou plusieurs identifiants de la totalité ou d'une partie des identifiants suivants : un identifiant d'agent d'utilisateur, un identifiant de dispositif, un IMEI et un identifiant de système d'exploitation.

8. Le système selon l'une quelconque des Revendications 1 à 7 où l'option de session est une option qui, lorsqu'elle est activée, configure l'utilisateur de façon à négocier des paramètres de session conformément à l'échange de préconditions ou à la procédure d'extension SIP de préconditions, respectivement.

9. Le système selon l'une quelconque des Revendications 1 à 8 où le système étant configuré de façon à modifier le message d'établissement de session comprend une ou plusieurs caractéristiques parmi :
le module de service (221, 222) est configuré de façon à modifier le message d'établissement de session de façon à configurer l'option de session dans la configuration souhaitée dans le message d'établissement de session, et
le module de service (221, 222) est configuré de façon à identifier le message d'établissement de session pour une modification où le système comprend un autre module configuré de façon à modifier, après la détection que le message d'établissement de session est identifié en vue d'une modification, le message d'établissement de session de façon à configurer l'option de session dans la configuration souhaitée dans le message d'établissement de session.

10. Un module de service (221, 222) destiné à la configuration d'une option de session pour une session d'un utilisateur dans un réseau de télécommunications mobile (210), où le module de service (221, 222) est configuré de façon à :
identifier, après la réception d'un message d'inscription à partir d'un utilisateur inscrit auprès d'un service de gestion d'options et envoyé par l'intermédiaire d'un terminal (201) pour l'utilisateur, des informations de terminal pour le terminal (201),
détecter, après la réception d'un message d'établissement de session pour l'utilisateur, la configuration actuelle pour l'option de session pour la session,
déterminer, en fonction des informations de terminal identifiées pour l'utilisateur, si le terminal (201) pour l'utilisateur est compatible avec la configuration souhaitée pour l'option de session, et
amener, lorsqu'il est déterminé que la configuration actuelle pour l'option de session n'est pas la configuration souhaitée et que le terminal (201) est compatible avec la configuration souhaitée pour l'option de session, le message d'établissement de session à être modifié de façon à configurer l'option de session vers la configuration souhaitée, où l'option de session est associée à un échange de préconditions ou à une procédure d'extension SIP de préconditions et où la configuration souhaitée est une désactivation de l'option de session.

11. Un procédé de configuration d'une option de session pour une session d'un utilisateur dans un réseau de télécommunications mobile (210) au moyen d'un module de service (221, 222) pour la fourniture à au moins l'utilisateur d'un service de configuration d'option de session pour la configuration de l'option de session, où le réseau de télécommunications mobile (210) est configuré de façon à transférer au module de service (221, 222), lorsque l'utilisateur est inscrit auprès du service de configuration d'option de session, des messages d'inscription provenant de l'utilisateur et des messages d'établissement de session pour l'utilisateur, le procédé comprenant :
l'identification, après la réception d'un message d'inscription provenant d'un utilisateur inscrit auprès du service de gestion d'options et envoyé par l'intermédiaire d'un terminal (201) pour l'utilisateur, d'informations de terminal pour le terminal (201),
la détection, après la réception d'un message d'établissement de session pour l'établissement d'une session pour l'utilisateur, que la configuration actuelle pour l'option de session est activée pour la session,
la détermination, en fonction des informations de terminal identifiées pour l'utilisateur, si le terminal (201) pour l'utilisateur est compatible avec la configuration souhaitée pour l'option de session, et
lorsqu'il est déterminé que la configuration actuelle pour l'option de session n'est pas la configuration souhaitée et lorsque, en fonction des informations de terminal identifiées pour le terminal (201), il est déterminé que le terminal (201) pour l'utilisateur est compatible avec la configuration souhaitée pour l'option de session, la modification du message d'établissement de session de façon à configurer l'option de session dans la configuration souhaitée, où l'option de session est associée à un échange de préconditions ou à une procédure d'extension SIP de préconditions et où la configuration souhaitée est une désactivation de l'option de session.

12. Un procédé d'actionnement d'un module de service (221, 222) pour la configuration d'une option de session pour une session d'un utilisateur dans un réseau de télécommunications mobile (210), le procédé comprenant par le module de service (221, 222) :
l'identification, après la réception d'un message d'inscription à partir d'un utilisateur inscrit auprès d'un service de gestion d'options et envoyé par l'intermédiaire d'un terminal (201) pour l'utilisateur, d'informations de terminal pour le terminal (201),
la détection, après la réception d'un message d'établissement de session pour l'utilisateur, de la configuration actuelle pour l'option de session pour la session,
la détermination, en fonction des informations de terminal identifiées pour l'utilisateur, si le terminal (201) pour l'utilisateur est compatible avec la configuration souhaitée pour l'option de session, et
l'opération consistant à amener, lorsqu'il est déterminé que la configuration actuelle pour l'option de session n'est pas la configuration souhaitée et que le terminal (201) est compatible avec la configuration souhaitée pour l'option de session, le message d'établissement de session à être modifié de façon à configurer l'option de session vers la configuration souhaitée, où l'option de session est associée à un échange de préconditions ou à une procédure d'extension SIP de préconditions et où la configuration souhaitée est une désactivation de l'option de session.

13. Un programme informatique comprenant des instructions qui, lorsqu'elles sont exécutées, amènent le procédé selon la Revendication 11 ou 12 à être mis en oeuvre.
